# EUROPEAN PATENT SPECIFICATION

(11) **EP 2 926 671 B1**
(45) Date of publication and mention of the grant of the patent: **16.01.2019**
(21) Application number: 13857891.9
(22) Date of filing: 26.11.2013
(51) Int. Cl.: A23L 5/10, A23L 19/12, A23L 19/18

(54) **PRODUCTION METHOD FOR NON-FRIED POTATO CHIPS**
HERSTELLUNGSVERFAHREN FÜR NICHTFRITTIERTE KARTOFFELCHIPS
PROCÉDÉ DE PRODUCTION POUR CHIPS DE POMME DE TERRE NON FRITES

(30) Priority: 27.11.2012 JP 2012258408
(43) Date of publication of application: 07.10.2015
(73) Proprietor: Nissin Foods Holdings Co., Ltd., Osaka-shi, Osaka 532-8524 (JP)
(72) Inventor: ONISHI, Atsushi, Osaka-shi (JP); MIYAZAKI, Yoshifumi, Osaka-shi (JP); TANAKA, Mitsuru, Osaka-shi (JP)
(74) Representative: Nieuwenhuys, William Francis
(86) International application number: PCT/JP2013/006940
(87) International publication number: WO 2014/083838

(56) References cited:
- EP-A1- 1 001 684
- WO-A1-96/39867
- US-A- 5 370 898
- US-A- 5 858 431
- US-A1- 2012 082 775
- CAIXETA, A. T. ET AL.: 'Impingement Drying of Potato Chips' J. FOOD PROC. ENG. vol. 25, no. 1, 2002, pages 63 - 90, XP 055171249
- IYOTA, H. ET AL.: 'Drying Sliced Raw Potatoes in Superheated Steam and Hot Air' DRYING TECHNOLOGY vol. 19, no. 7, 2001, pages 1411 - 1424, XP 055171256
- MOREIRA, R.G.: 'Impingement drying of foods using hot air and superheated steam' JOURNAL OF FOOD ENGINEERING vol. 49, 2001, pages 291 - 295, XP 002602908 & WO 2013 145601 A1 (NISSIN FOODS HOLDINGS CO., LTD.) 03 October 2013

## Description

### Technical Field

The present invention relates to non-fried potato chips and a method for producing the same.

### Background Art

Potato chips produced by frying thin potato slices in high-temperature oil have a unique light crispy texture and a savory flavor. However, fried potato chips have a high oil content that reaches about 40% of the product weight, and therefore have a very high calorie content. Therefore, some methods have been developed to produce non-fried potato chips having a low oil content. However, non-fried potato chips can hardly have a crispy texture like conventional potato chips, and have a crunchy texture or a texture like thin paper.

Hereinbelow, conventional techniques relating to snack foods including non-fried potato chips and fabricated potato chips will be described with reference to prior patent literatures.

Patent Literatures 1, 2, and 3 disclose techniques in which potato is heated with microwaves and then further dried by another drying method, and all these techniques focus on dehydration and puffing caused by microwaves. Patent Literatures 4 and 5 disclose techniques in which potato is dried using overheated steam, and both the techniques are intended to puff dough by a large amount of heat of overheated steam. Further, Patent Literatures 6 and 7 disclose heat-drying techniques in which puffing is caused by blowing high-temperature and high-velocity air stream. Patent Literature 8 describes a method for preparing dehydrated, hot-air expanded potato pieces in which potato slices are heated by blowing high-temperature, slow, laminar air stream at 200°C, 130° and 48°C followed by a second heating step in which the potato slices are heated by blowing high-temperature and high-velocity air stream at 285°C. Patent Literature 9 discloses a process for preparing oven-baked potato chips in an impingement oven, using heated air or steam ejected at high pressure through tubes in the oven chamber. The oven has multiple zones, where there are different temperatures and pressures of the air or steam flow: a first zone, at a temperature of between about 150°C and about 230°C (300-450°F) at the highest air pressure, a second zone, at a temperature of between about 150°C and about 230°C (300-450°F) at a reduced air pressure and a third heating step at the same temperature and a further reduced air pressure; the baking takes place using hot air or steam.

Some of these prior patent literatures describe also a drying method in which microwaves and overheated steam are used in combination and a drying method in which microwaves and high-temperature and high-velocity air stream are used in combination. When dough prepared by mashing potatoes to a paste is used as a raw material as in the case of fabricated potato chips, the methods described in the prior patent literatures can produce potato chips having a crispy texture like fried potato chips. However, when raw potato slices are directly used, none of the methods described in the prior patent literatures can produce potato chips having a crispy texture like fried potato chips.

### Citation List

### Patent Literature

PTL 1: JP-A-56-39760
PLT 2: JP-W-6-508518
PLT 3: JP-W-2000-508887
PTL 4: JP-A-2006-191871
PLT 5: Japanese Utility Model No. 3160399
PLT 6: JP-A-2005-245389
PTL 7: JP-W-2001-510686
PTL8: EP 1 001 684 A1
PTL9: US 5 370 898 A

### Summary of Invention

### Technical Problem

It is an object of the present invention to provide a production method in which potato chips are produced not by frying in oil but by drying so that their oil content is reduced but their flavor and texture are comparable to those of potato chips produced by frying in oil, which are difficult to produce by conventional techniques.

### Solution to Problem

In order to achieve the above object, the present inventors have focused attention on heat treatment of potato at high temperature, and therefore have tested various heating methods. However, desired flavor and texture could hardly be achieved by a single drying method. Then, the present inventors have studied various combinations of drying methods, and as a result have succeeded in producing potato chips comparable in texture to potato chips produced by frying in oil even when potato slices are used as a raw material. This has led to the completion of the present invention.

More specifically, the present invention is directed to a method for producing potato chips as claimed in claim 1.

Here, the heat treatment in the first heating step with high-temperature and high-velocity air stream refers to a method in which high-temperature and high-velocity air stream at 120° C or higher but 160°C or less is blown onto potato slices to heat the potato slices at once. The heat treatment is performed by, for example, blowing high-temperature air stream onto food through slit- or tube-shaped nozzles provided in a heating chamber at a high air velocity, exceeding 40 m/s to heat the food. Such a technique is used also for producing puffed confectionery or for baking cookies. In the method for producing potato chips according to the present invention, the heat treatment with high-temperature and high-velocity air stream in the first stage (first heating step) is performed by blowing high-temperature and high-velocity air stream onto potato slices while moisture is added to the potato slices to heat the potato slices under wet conditions.

More specifically, the addition of moisture is preferably performed by supplying a large amount of saturated steam to a heating chamber in which the heat treatment with high-temperature and high-velocity air stream is performed. Alternatively, the addition of moisture is preferably performed also by spraying water onto the potato slices in the heating chamber during heating.

As described above, the potato slices are heated with high-temperature and high-velocity air stream at 120° C or higher but 160 °C or less, the first heating step is performed to heat-treat the potato slices in a state where moisture is added, and then the second heating step is performed to puff the potato slices by blowing dry high-temperature and high-velocity air stream onto the potato slices while no moisture is added. As a result, the inside of the potato slices is sufficiently and uniformly puffed, and therefore non-fried potato chips having a light crispy texture can be obtained which cannot be obtained by any conventional method. It is to be noted that in order to obtain potato chips having a light crispy texture, the temperature of the second heating step is preferably increased to the extent that potato chips do not burn so as to be higher than that of the first heating step.

Further, in the present invention, oil is preferably applied to the potato slices before the second heating step involving blowing high-temperature and high-velocity air stream. This allows the non-fried potato chips to have a more crispy texture like fried potato chips. Here, the amount of the oil applied to the potato slices may be very small. Therefore, the oil content of the product according to the present invention can be reduced to one-half or less, optimally about 1/3 to 1/20 of that of a fried product while the product according to the present invention has a crispy texture comparable to that of the fried product. This is effective also in reducing the amount of production of acrylamide suspected of being a carcinogen as compared to the fried product.

Further, in the present invention, the potato slices are preferably further subjected to final drying by hot-air drying after the second heating step. The potato slices may be finally put into a dry state by continuously performing heating with high-temperature and high-velocity air stream in the second heating step. In this case, however, the potato slices are likely to burn due to high temperature. Therefore, after being puffed with high-temperature and high-velocity hot air, the potato slices are preferably dried in a conventional hot-air drier at a lower temperature of, for example, 100°C or less.

Further, as for specific conditions of the present invention, the heating time of the first heating step involving heating with high-temperature and high-velocity air stream and addition of moisture is in the range of 15 seconds to 120 seconds. When the heating time is in the above range, potato chips having a particularly crispy texture can be obtained.

Further, as for conditions of the second heating step, the potato slices are heated by blowing air stream thereonto at a treatment temperature of 150°C or higher and an air velocity of 40 m/s or higher for 60 seconds to 5 minutes without burning the potato slices. It is to be noted that for the reduction in the amount of production of acrylamide the temperature of the air stream blown onto the potato slices is 250°C or less.

The present disclosure is directed also to potato chips produced by the above production method. The potato chips can have an oil content of 15 wt% or less, and are therefore healthy potato chips having a crispy texture and a low calorie content.

### Advantageous Effects of Invention

According to the method for producing potato chips of the present invention, it is possible to obtain potato chips that are produced without frying in oil and therefore have a significantly reduced oil content even when oil is applied to potato slices in the course of production, but have a crispy texture comparable to that of fried potato chips. Here, the crispy texture refers to a texture such that food is readily broken into pieces when taken into the mouth and the pieces do not remain in the mouth.

### Description of Embodiments

The present invention will be described in detail with reference to a production process. In the present invention, thin slices of raw potatoes are used as a raw material. Raw potatoes are washed, peeled if necessary, trimmed, and cut into thin slices with a slicer or the like. The thickness of the slices is preferably about 0.8 mm to 3.0 mm, particularly preferably about 1.0 mm to 1.4 mm in terms of the texture or the like of a product. It is to be noted that raw potatoes may be cut into slices having smooth surfaces, but may also be cut into slices having a W-shaped cross section.

These potato slices may be used directly. Alternatively, these potato slices may be previously immersed in cold or hot water and then dewatered to wash away starch from the surface of the potato slices and prevent discoloration caused by long-time exposure to air.

Oil is preferably applied to the potato slices. Oil has a higher boiling point than water. Therefore, it is considered that the potato slices can be efficiently heated to a temperature exceeding 100°C in a heating step, to be described later, by adhering oil to the potato slices so that the product can have a crispy texture. The application of the oil is preferably performed before a second heating step, to be described later, involving blowing high-temperature and high-velocity air stream and addition of no or less moisture. More specifically, the application of the oil may be performed before, during, or after heating with high-temperature and high-velocity air stream that is performed while moisture is added (first heating step to be described later), or may be performed at two or more time points of them.

The oil to be applied is not particularly limited, and examples thereof include rice refined oil and palm olein oil. The amount of the oil to be applied may be as small as about 1% of the weight of the potato slices. In order to obtain potato chips having a low oil content and a good texture as a product, the oil is particularly preferably applied in an amount of about 1.5 to 5 wt%. A method for adhering the oil may be appropriately selected from, for example, spraying, coating, and immersion.

In the present invention, the thus prepared potato slices or potato slices with oil are heated by performing a first heating step in which high-temperature and high-velocity air stream is blown onto the potato slices while moisture is added. The high-temperature and high-velocity air stream can be used at a temperature of 120 to 160°C and an air velocity of 40 m/s or higher for 15 seconds to 120 seconds. The addition of moisture is most preferably performed by blowing a large amount of saturated steam into a heating chamber, in which high-temperature and high-velocity air stream is blown onto the potato slices, so that moisture is added to the potato slices. The addition of moisture may be performed by means of, for example, spraying water onto the potato slices during heating.

It is to be noted that the first heating step involving blowing high-temperature and high-velocity air stream and addition of moisture may be performed intermittently in two or more batches. In this way, the potato slices are heated by blowing high-temperature and high-velocity air stream thereonto while moisture is added. As a result, the potato slices are gelatinized and quickly heated to 120°C or higher without putting the potato slices into a dry state.

Further, another heating step capable of quickly heating the potato slices may be additionally performed before or after the first heating step involving heating with high-temperature and high-velocity air stream and addition of moisture. For example, a heating method such as heating with microwaves or heating with overheated steam may be performed in combination with the first heating step. Means for heating with microwaves is not particularly limited, and an example thereof includes a microwave oven. When a microwave oven is used at 500 W (10 to 20 g of potato slices), heating with microwaves is preferably performed for about 10 to 30 seconds. By heating the potato slices with microwaves in this way, the inside of the potato slices is particularly gelatinized and quickly heated.

After the completion of the application of oil and the first heating step performed under wet conditions, the potato slices are then heated and puffed by performing a second heating step in which high-temperature and high-velocity air stream is blown onto the potato slices under drying conditions, without adding moisture. The potato slices are estimated to be puffed to some extent also in the previous first heating step, but are most puffed in the second heating step in which the potato slices are heated for drying. However, when only the second heating step is performed, the potato slices are not sufficiently puffed or are non-uniformly puffed, and therefore the product cannot have a crispy texture.

The second heating step involving blowing high-temperature and high-velocity air stream may be performed at at least 150°C or higher but 250°C or less so that the potato slices are puffed. However, in order to achieve a more preferred texture, the second heating step is preferably performed at a temperature higher than that of the first heating step, optimally about 180°C or higher and an air velocity higher than that of the first heating step, that is, about 50 m/s or higher for, for example, about 1 minute and 30 seconds to 5 minutes to the extent that potato chips do not burn. More specifically, when the temperature and the air velocity of the air stream are about 200°C and about 60 m/s, respectively, the second heating step is performed for, for example, about 3 minutes. When the temperature of the air stream is less than about 150°C, the product is likely to have a bad texture. Further, when the air velocity of the air stream is about 40 m/s or less, the potato slices are less likely to puff so that the final product has a hard texture. Further, when a reduction in the production of acrylamide is desired, the potato slices are preferably puffed and dried at about 250°C or less to the extent that potato chips do not burn.

A device for blowing high-temperature and high-velocity air stream onto potato slices used in each of the first and second heating steps in the present invention is not particularly limited as long as the potato slices can be puffed and dried. However, a device is preferred in which air stream supplied from a fan is jetted through a number of slit- or tube-shaped jet nozzles provided above a conveyor that runs through a drier to blow high-velocity hot air onto an object on the conveyor. More specifically, a device disclosed in JP-A-9-210554 or JP-A-2003-90681 or a vertical air impingement-type device (THERMOZONE (registered trademark) manufactured by ARAKAWA CO., LTD.) is used.

In this way, the potato slices may be puffed and dried by continuously performing heat treatment in the second heating step to produce potato chips. However, the potato chips are likely to burn when such high-temperature air stream is continuously blown thereonto. For this reason, after heat-treated with high-temperature and high-velocity air stream in the second heating step, the potato slices are preferably further subjected to final drying by reducing the temperature of the air stream or by a conventional hot-air drying method performed at about 80 to 120°C, preferably 100°C or less. If necessary, the final drying may be performed in combination with another drying method. The potato slices are preferably dried until their final moisture content is reduced to about 3% or less.

After the drying, the potato chips may be seasoned by spraying a small amount of seasoning oil and sprinkling salt, spices, or the like. The thus obtained seasoned or non-seasoned potato chips are provided as a final product preferably hermetically sealed in a bag or a package of an aluminum-evaporated film or the like, impervious to oxygen and moisture.

The thus produced potato chips according to the present invention are non-fried potato chips, and therefore can have a lower oil content of about 25% or less as compared to fried potato chips while having flavor and texture comparable to those of the fried potato chips. Further, the potato chips according to the present disclosure can have an oil content as low as about 1% while having a flavor that is not significantly different from that of fried potato chips. Further, the potato chips according to the present disclosure can have an oil content as low as about 2% while having a preferred texture. That is, the oil content of the product can be reduced to 1/2 or less to 1/20 of that of fried potato chips, which makes it possible to significantly reduce the calorie of the product. Further, the amount of production of acrylamide, which is a problem for fried potato chips, is very small.

### <Example 1>

Potatoes (breed: TOYOSHIRO) suitable for potato chips were washed, peeled with a peeler, and cut into slices having a thickness of 1.0 mm to 1.1 mm with a slicer. The potato slices were spread, and palm olein oil was sprayed onto the potato slices in an amount of 2 wt% of the weight of the potato slices. The potato slices were subjected to the first heating step in which the potato slices were heat-treated by blowing high-temperature and high-velocity air stream thereonto while moisture was added. The heat treatment was performed twice for 30 seconds at a time.

More specifically, the potato slices were heat-treated by blowing high-temperature and high-velocity air stream thereonto for 30 seconds using a high-temperature and high-velocity air stream heat treatment device (THERMOZONE (registered trademark) manufactured by ARAKAWA CO., LTD., fluidized bed (air bed)-type heat treatment device) equipped with a number of thin tube-shaped jet nozzles located above a conveyor while moisture was added by blowing saturated steam into a heating chamber of the device at a steam flow rate of 180 kg/h so that the temperature and air velocity of the air stream impinging on the surface of the potato slices on the conveyor were 150°C and 65 m/s, respectively. Then, the potato slices were taken out of the chamber. After 10 seconds, the potato slices were again heat-treated in the same manner.

After the completion of the first heating step involving addition of moisture, the potato slices were taken out of the chamber. After 10 seconds, the potato slices were subjected to the second heating step in which the potato slices were again heat-treated by blowing high-temperature and high-velocity air stream with a temperature of 200°C and an air velocity of 60 m/s thereonto for 3 minutes using the above-described high-temperature and high-velocity air stream heat treatment device without blowing saturated steam into the chamber. Finally, the potato slices were subjected to final drying for 60 minutes in a hot-air drier at a temperature of 85°C and an air velocity of 4 m/s until their moisture content was reduced to 2% to produce non-fried potato chips.

The oil content of the non-fried potato chips of Example 1 was measured and found to be 8%. The non-fried potato chips of Example 1 had a calorie content of about 410 kcal/100 g. That is, the oil and calorie contents of the non-fried potato chips of Example 1 were significantly reduced as compared to a commercially-available common fried product (oil content: about 40%, calorie content: 570 kcal/100 g). Further, the acrylamide content of the non-fried potato chips of Example 1 was 100 ppb or less.

### <Comparative Example 1>

Commercially-available non-fried potato chips (manufactured by SAPPORO FINE FOODS CO., LTD. under the trade name of "Potekaru") were purchased and used as Comparative Example 1.

### <Comparative Example 2>

Based on JP-A-2005-245389 listed as Patent Literature 6 in the above citation list, non-fried potato chips of Comparative Example 2 were produced in the following manner: potato slices were heated with microwaves, and then directly heated and puffed with high-temperature and high-velocity air stream, and then dried by conventional hot-air drying.

More specifically, potatoes (breed: TOYOSHIRO) suitable for potato chips were washed, peeled with a peeler, and cut into slices having a thickness of 1.0 mm to 1.1 mm with a slicer in the same manner as in Example 1. Twenty grams of the potato slices were heated with microwaves for 150 seconds in a microwave oven with an output power of 500 W to reduce their moisture content to 20%.

After the heating with microwaves, the potato slices were heat-treated to the extent that they did not burn by blowing high-temperature and high-velocity air stream with an air velocity of 60 m/s and a temperature of 200°C thereonto for 1 minute using the same high-temperature and high-velocity air stream heat treatment device as used in Example 1 of the present invention. Then, palm olein oil was sprayed onto the potato slices so that the oil content of a final product was 8%. Finally, the potato slices were subjected to final drying in a hot-air drier at a temperature of 85°C and an air velocity of 4 m/s for 1 hour until their moisture content was reduced to about 2%. In this way, non-fried potato chips were produced.

### <Comparative Example 3>

For the purpose of confirming the effect of adding moisture in the first heating step, the heating steps (first and second heating steps) were performed in the same manner as in Example 1 except that moisture was not added in the first heating step, that is, potato slices were heated by blowing only high-temperature and high velocity air stream thereonto without blowing steam.

More specifically, palm olein oil was sprayed onto potato slices in an amount of 2 wt% of the weight of the potato slices in the same manner as in Example 1. Then, 100 g of the potato slices were heated by blowing high-temperature and high-velocity air stream thereonto for 30 seconds using the same high-temperature and high-velocity air stream heat treatment device as used in Example 1, without blowing steam into the chamber so that the temperature and air velocity of the air stream impinging on the surface of the potato slices were 150°C and 65 m/s, respectively. The potato slices were heated twice.

After the heat treatment with high-temperature and high-velocity air stream was performed without blowing steam, the potato slices were once taken out of the chamber. After 20 seconds, the potato slices were again heat-treated in the same manner as in the second heating step in Example 1 by blowing high-temperature and high-velocity air stream with a temperature of 200°C and an air velocity of 60 m/s thereonto for 3 minutes using the above-described high-temperature and high-velocity air stream heat treatment device, without blowing saturated steam. Finally, the potato slices were subjected to final drying for 60 minutes in a hot-air drier at a temperature of 85°C and an air velocity of 4 m/s until their moisture content was reduced to 2% to produce non-fried potato chips of Comparative Example 3.

Sensory evaluation was performed by 5 panelists on the non-fried potato chips produced in Example 1 and Comparative Examples 2 and 3 and commercially-available non-fried potato chips of Comparative Example 1. The sensory evaluation was performed according to the following criteria. It is to be noted that all the panelists gave each sample the same rating.

The results are shown in Table 1.

A: The potato chips had a crispy texture comparable to that of fried potato chips.
B: The potato chips were slightly inferior in texture to fried potato chips but had a sufficient crispy texture so that the panelists did not notice that the potato chips were non-fried until it was pointed out to the panelists.
C: The potato chips had a crunchy texture different from the texture of fried potato chips.

The production method according to the present invention can produce non-fried potato chips having a texture rated as A or B according to the above criteria.

**[Table 1]**

| Process | | Sensory evaluation |
|---|---|---|
| Example 1 | Oil spraying → Steam + High-temperature air stream (150°C) → High-temperature air stream (200°C) → Hot air (85°C) | A |
| Comparative Example 1 | Commercially-available product | C |
| Comparative Example 2 | Microwaves → High-temperature air stream (200°C) → Oil spraying → Hot air (85°C) | C |
| Comparative Example 3 | Oil spraying → High-temperature air stream (150°C) → High-temperature air stream (200°C) → Hot air (85°C) | C |

### <Comparative Test 1> Study of first heating step

A preferred heating time of the first heating step in the production method of Example 1 was examined by performing the first heating step, involving addition of moisture, once for different treatment times. More specifically, the first heating step was performed using the same high-temperature and high-velocity air stream heat treatment device as used in Example 1 by heating potato slices continuously (once) so that the temperature and air velocity of air stream impinging on the surface of the potato slices were 150°C and 65 m/s for 15 seconds (Example 2), 30 seconds (Example 3,) 60 seconds (Example 4), or 120 seconds (Example 5) while moisture was added by blowing saturated steam into the heating chamber of the device at a steam flow rate of 180 kg/h.

After subjected to the first heating step for each treatment time, the potato slices were taken out of the chamber. After 10 seconds, the potato slices were again heat-treated in the same manner as in the second heating step in Example 1 by blowing high-temperature and high-velocity air stream with a temperature of 200°C and an air velocity of 60 m/s thereonto for 3 minutes using the above-described high-temperature and high-velocity air stream heat treatment device without blowing saturated steam. Finally, the potato slices were subjected to final drying for 60 minutes in a hot-air drier at a temperature of 85°C and an air velocity of 4 m/s until their moisture content was reduced to 2% to produce non-fried potato chips. It is to be noted that for the purpose of comparison, potato chips of Comparative Example 4 were produced by performing only the second heating step without performing the first heating step involving addition of moisture. Sensory evaluation was performed on non-fried potato chips produced by these different production methods. The results are shown in Table 2. It is to be noted that the sensory evaluation was performed in the same manner as described above.

**[Table 2]**

| Process | First heating step | Sensory evaluation | Comment |
|---|---|---|---|
| Comparative Example 4 | 0 seconds | C | Crunchy texture |
| Example 2 | 15 seconds | B | Slightly whitish, Slightly raw |
| Example 3 | 30 seconds | A | |
| Example 4 | 60 seconds | A | |
| Example 5 | 120 seconds | B | Slightly hard |

### <Reference Test>

As described above, the method according to the present invention includes the first heating step in which potato slices are heated with high-temperature and high-velocity air stream while moisture is added and the following second heating step in which the potato slices are heated with high-temperature and high-velocity air stream while less, preferably no, moisture is added, which makes it possible to produce non-fried potato chips having a crispy texture. As a result of studies by the present inventors, it has been found that the first heating step can be replaced with a heating step using overheated steam or a heating step using microwaves and overheated steam in combination.

The present inventors have performed reference tests using an experimental system in which heating with microwaves and heating with overheated steam are performed in combination (corresponding to the first heating step in the present invention), and then heating with high-temperature and high-velocity air stream (second heating step) is performed. The reference tests includes a test in which spraying oil onto potato slices is performed before the first heating step, a test in which spraying oil onto potato slices is performed after the first heating step, and a test in which the second heating step is performed at different temperatures of high-temperature and high-velocity air stream. The data of the reference tests will be shown below to demonstrate that application of oil can be performed either before or after the first heating step and to disclose preferred heating conditions of the second heating step.

### <Reference Example 1>

Potatoes were cut into slices in the same manner as in Example 1 of the present invention, and palm olein oil was sprayed onto the potato slices in an amount of 2 wt% of the weight of the potato slices. Twenty grams of the potato slices were placed in a microwave oven with an output power of 500 W without overlapping more than the 2 potato slices and heated with microwaves for 20 seconds. After the heating with microwaves, the potato slices were heated for 30 seconds with overheated steam in a steam chamber to which the overheated steam was supplied at a steam flow rate of 180 kg/h so that the temperature of the overheated steam impinging on the surface of the potato slices was 190°C (corresponding to the first heating step).

Then, the potato slices were heat-treated by blowing high-temperature and high-velocity air stream with a maximum air velocity of 60 m/s and a temperature of 200°C thereonto for 3 minutes using the same high-temperature and high-velocity air stream heat treatment device as used in Example 1 of the present invention, equipped with a number of thin tube-shaped jet nozzles located above a conveyor. Finally, the potato slices were subjected to final drying for 60 minutes in a hot-air drier at a temperature of 85°C and an air velocity of 4 m/s until their moisture content was reduced to 2% to produce non-fried potato chips.

The oil content of the non-fried potato chips of Reference Example 1 was measured and found to be 8%. The non-fried potato chips of Reference Example 1 had a calorie content of 414 kcal/100 g. That is, the oil and calorie contents of the non-fried potato chips of Reference Example 1 were significantly reduced as compared to a commercially-available common fried product (oil content: about 40%, calorie content: 570 kcal/100g).

### <Reference Example 2> Study of step of adhering oil

Non-fried potato chips were produced in the same manner as in Reference Example 1 except that the step of spraying palm olein oil onto potato slices in an amount of 2 wt% of the weight of the potato slices was performed after the heating with overheated steam but before the heating with high-temperature and high-velocity air stream.

### <Reference Examples 3 to 5> Study of conditions of second heating step

Non-fried potato chips were produced in the same manner as in Reference Example 1 except that the temperature and time of the heat treatment with high-temperature and high-velocity air stream (corresponding to the second heating step of the present invention) were changed from 200°C and 3 minutes to 300°C and 1 minute and 30 seconds (Reference Example 3), 250°C and 2 minutes (Reference Example 4), or 180°C and 4 minutes and 30 seconds (Reference Example 5).

The acrylamide content of the thus produced potato chips was measured. The acrylamide content was measured by GC/MS based on a method used in National Food Research Institute (Food Additives and Contaminants, 2003, 20, 215-220). It is to be noted that according to the homepage of the Ministry of Agriculture, Forestry, and Fisheries of Japan (Detailed information about acrylamide in foods), the acrylamide content of commercially-available fried potato chips is 117 ppb to 3770 ppb. The results of sensory evaluation performed on non-fried potato chips produced by these different production methods are shown in Table 3. The sensory evaluation was performed in the same manner as described above.

**[Table 3]**

| Process | | Sensory evaluation | Comment | Acrylamide content |
|---|---|---|---|---|
| Reference Example 1 | 200°C/3 min | A | Excellent | 27 ppb |
| Reference Example 2 | Application of oil was performed after the first heating step. | A | Excellent | Unmeasured |
| Reference Example 3 | 300°C/1.5 min | A | Excellent | 1120 ppb |
| Reference Example 4 | 250°C/2 min | A | Excellent | 440 ppb |
| Reference Example 5 | 180°C/4 min | B | Slightly crunchy | 127 ppb |

### Industrial Applicability

The present invention is useful for producing healthy potato chips having a low calorie content and a low production amount of acrylamide.

## Claims

1. A method for producing potato chips, comprising:
a first heating step in which potato slices are heated by blowing a high-temperature and high-velocity air stream at a temperature of 120 °C or higher but 160 °C or less and an air velocity of 40 m/s or higher for 15 to 120 seconds thereonto while moisture is added; and
a second heating step in which, after the first heating step, the potato slices are heated by blowing a high-temperature and high-velocity air stream at a temperature of 150 °C or higher but 250 °C or less and an air velocity of 40 m/s or higher for 60 seconds to 5 minutes thereonto while no moisture is added.

2. The method for producing potato chips according to claim 1, wherein the addition of moisture is performed by introducing saturated steam into a heating chamber in which the potato slices are heated by blowing a high-temperature and high-velocity air stream thereonto.

3. The method for producing potato chips according to any one of claims 1 or 2, comprising, before the second heating step, a step of adhering oil to the potato slices.

4. The method for producing potato chips according to any one of claims 1 to 3, comprising, after the second heating step, a step of further subjecting the potato slices to final drying by a hot-air drying method.

## Patentansprüche

1. Verfahren zum Herstellen von Kartoffelchips, umfassend:
einen ersten Erhitzungswärmungsschritt, wobei Kartoffelscheiben durch Beblasen mit einem Luftstrom mit hoher Temperatur und hoher Geschwindigkeit auf eine Temperatur von 120°C oder mehr aber 160°C oder weniger und einer Luftgeschwindigkeit von 40m/s oder mehr für 15 bis 120 Sekunden während Feuchtigkeit zugefügt wird, erhitzt werden; und
einen zweiten Erwärmungsschritt, wobei, nach dem ersten Erhitzungswärmungsschritt, die Kartoffelscheiben durch Beblasen mit einem Luftstrom mit hoher Temperatur und hoher Geschwindigkeit auf eine Temperatur von 150°C oder mehr aber 250°C oder weniger und einer Luftgeschwindigkeit von 40m/s oder mehr für 60 Sekunden bis 5 Minuten während keine Feuchtigkeit zugefügt wird, erhitzt werden.

2. Verfahren zum Herstellen von Kartoffelchips nach Anspruch 1, wobei das Zufügen von Feuchtigkeit durch Einführen von gesättigtem Dampf in eine Erhitzungskammer, in der die Kartoffelscheiben durch Beblasen mit einem Luftstrom mit hoher Temperatur und hoher Geschwindigkeit erhitzt werden, durchgeführt wird.

3. Verfahren zum Herstellen von Kartoffelchips nach einem der Ansprüche 1 oder 2, umfassend, vor dem zweiten Erhitzungsschritt, einen Schritt, in dem den Kartoffelscheiben Öl zugefügt wird.

4. Verfahren zum Herstellen von Kartoffelchips nach einem der Ansprüche 1 bis 3, umfassend, nach dem zweiten Erhitzungsschritt, einen Schritt, in dem die Kartoffelscheiben durch ein Heißlufttrocknungsverfahren einem abschliessenden Trocknen unterzogen werden.

## Revendications

1. Procédé de fabrication de chips de pommes de terre, comprenant :
une première étape de chauffage dans laquelle les tranches de pommes de terre sont chauffées en faisant souffler sur celles-ci un flux d'air à haute température et à vitessse élevée à une températurte de 120°C ou plus mais de 160°C ou moins et une vitesse d'air de 40m/s ou plus durant 15 à 120 secondes tout en ajoutant de l'humidité ; et
une deuxième étape de chauffage dans laquelle, après la première étape de chauffage, les tranches de pommes de terre sont chauffées en faisant souffler sur celles-ci un flux d'air à haute tempétature et à vitessse élevée à une température de 150°C ou plus mais de 250°C ou moins et une vitesse d'air de 40m/s ou plus durant 60 secondes à 5 minutes sans ajouter d'humidité.

2. Procédé de fabrication de chips de pommes de terre selon la revendication 1, dans lequel l'ajout d'humidité est effectué en introduisant de la vapeur saturée dans une chambre de chauffage dans laquelle les tranches de pommes de terre sont chauffées en faisant souffler sur celles-ci un flux d'air à haute température et à vitesse élevée.

3. Procédé de fabrication de chips de pommes de terre selon l'une quelconque des revendications 1 ou 2, comprenant, avant la deuxième étape de chauffage, une étape d'adhésion d'huile aux tranches de pommes de terre.

4. Procédé de fabrication de chips de pommes de terre selon l'une quelconque des revendications 1 à 3, comprenant en outre, après la deuxième étape de chauffage, une étape de soumission des tranches de pommes de terre à un chauffage final par un procédé de séchage à air chaud.
